# EUROPEAN PATENT SPECIFICATION

(11) **EP 4 422 854 B1**
(45) Date of publication and mention of the grant of the patent: **15.10.2025**
(21) Application number: 22812551.4
(22) Date of filing: 27.10.2022
(51) Int. Cl.: B29D 30/00

(54) **METHOD OF PRODUCING A TYRE EQUIPPED WITH AN ELECTRONIC DEVICE**
VERFAHREN ZUR HERSTELLUNG EINES REIFENS MIT EINER ELEKTRONISCHEN VORRICHTUNG
PROCÉDÉ DE FABRICATION D'UN PNEUMATIQUE ÉQUIPÉ D'UNE UNITÉ ÉLECTRONIQUE

(30) Priority: 29.10.2021 IT 202100027812
(43) Date of publication of application: 04.09.2024
(73) Proprietor: Bridgestone Europe NV/SA, 1930 Zaventem (BE)
(72) Inventor: IOZIA, Francesco, 00128 Roma (IT); ARENDS, Robin Frank, 00128 Roma (IT)
(74) Representative: Marchetti, Alessio
(86) International application number: PCT/EP2022/080126
(87) International publication number: WO 2023/073126

(56) References cited:
- EP-A1- 3 533 640
- EP-A1- 3 632 666
- EP-A1- 3 756 870
- DE-A1- 102018 209 766
- US-A1- 2020 070 598

## Description

### Technical sector

The present invention relates to a method of producing a tyre equipped with an electronic device (in particular a transponder).

### Prior art

In recent years, so-called "*smart*" tyres have emerged, which are capable of forming an active part of modern vehicles, supplying information concerning the type of tyres mounted, information concerning the status of the tyres and also information concerning environmental conditions.

*A "smart"* tyre is normally equipped with a transponder (that is, an electronic device suitable for communicating in radio frequency) which permits remote communication (that is, to both the vehicle whereupon the tyre is mounted and to an operator who must carry out the checking or the replacement of the tyre) of the identification, the characteristics and the history of the tyre. Patent documents EP 3756870 A1 and EP 3632666 A1 disclose methods for applying electronic devices onto the inner surface of tyres.

Recently, the unification has been proposed of RFID ("*Radio-Frequency IDentification*") technology, based upon the presence of transponders, and TPMS ("*Tyre Pressure Monitoring Systems*") technology, which measures the effective inflation pressure in order to store within transponders the effective inflation pressure and then remotely communicate the effective inflation pressure by means of the transponders themselves. A transponder intended to be coupled to a tyre is inserted beforehand into a rubber housing that completely surrounds the transponder on all sides. Subsequently, in order to couple a transponder to a tyre, it is possible to attach the transponder to an inner surface of the tyre (typically above the innerliner that ensures the air tightness of the tyre) or else it is possible to integrate the transponder inside the side wall of the tyre (i.e., arrange the transponder in the middle of the various layers that make up the side wall of the tyre). Attaching the transponder to an inner surface of the tyre does not change the structure of the tyre in any way concerning the presence of foreign bodies and therefore ensures that the tyre may offer the expected performance. A transponder may be attached to the inner surface of the tyre when the tyre is still green (i.e., before vulcanizing the tyre) or when the tyre has already been vulcanized.

The tyre is first wetted with a layer of lubricant that has the function of facilitating the detachment of the tyre from the vulcanization mould at the end of the vulcanization process (alternatively the blister of the vulcanization mould could be wetted using the lubricant); consequently, the surface of the vulcanized tyre has a layer of lubricant that must be removed locally (for example by cleaning using a laser beam) in the area where the transponder is applied (otherwise, the transponder would not be able to adhere with an adequate force to the surface of the tyre). Consequently, attaching the transponder to the inner surface of the tyre when the tyre has already been vulcanized requires additional processing (cleaning the area where the transponder is applied) which increases production times and costs.

In addition, to ensure adequate adhesion of the transponder to the surface of the vulcanized tyre, it is necessary to use an adhesive (glue) that is sufficiently strong and compatible with the rubber compound that makes up the tyre innerliner, and that does not in any way damage the integrity of the tyre innerliner; this adhesive also constitutes an additional cost in economic and environmental terms.

It would therefore be preferable, in order to reduce production times and costs, to attach the transponder to the inner surface of the tyre when the tyre is still green (i.e., before vulcanizing the tyre). It has, however, been observed that the high pressure and high temperature reached during the vulcanization process may cause pieces of the transponder to emerge outside the rubber housing thereof (the so-called "*surfacing*" phenomenon), often causing a malfunction (if not the complete failure) of the transponder. In addition, the high pressure and high temperature reached during the vulcanization process may bring pieces of the transponder into contact with the carcass cords, thereby often causing a malfunction (if not complete failure) of the transponder and also negatively interfering with the operation of the carcass cords. Finally, the high pressure and high temperature that are reached during the vulcanization process may cause irregularities in the innerliner (particularly at the edge of the rubber housing of the transponder) that in the long run may cause cracks in the innerliner, leading to air leaks.

### Description of the invention

The purpose of the present invention is to provide a production method for a tyre equipped with an electronic device that avoids damage to the tyre or to the electronic device and that is at the same time easy and economical to implement.

According to the present invention, a production method for a tyre equipped with an electronic device is provided as set forth in the appended claims.

The claims describe preferred embodiments of the present invention that form an integral part of the present description.

### Brief description of the drawings

The present invention will now be described with reference to the attached drawings, which illustrate an exemplary, non-limiting embodiment, wherein:
- Figure 1 is a schematic view of a transponder inserted into a rubber housing;
- Figures 2 and 3 are two cross-sectional views of the transponder of Figure 1 according to the section line II-II and according to the section line III-III, respectively;

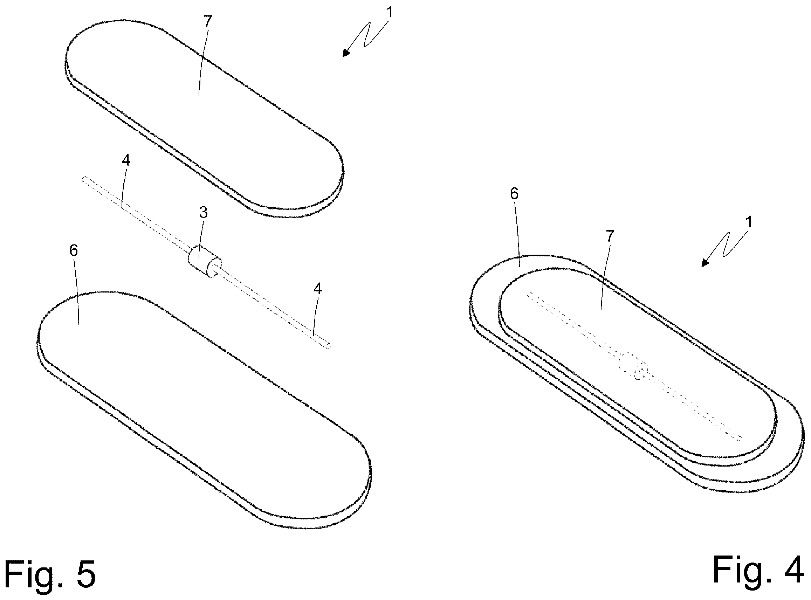

- Figure 4 is a perspective view of the transponder in Figure 1;
- Figure 5 is an exploded perspective view of the transponder in Figure 1;
- Figures 6 and 7 are two graphs showing the change in strength and adhesiveness of the rubber as the vulcanization process progresses; and
- Figure 8 is a schematic, cross-sectional view of a tyre whereto the transponder in Figure 1 has been applied.

### Preferred embodiments of the invention

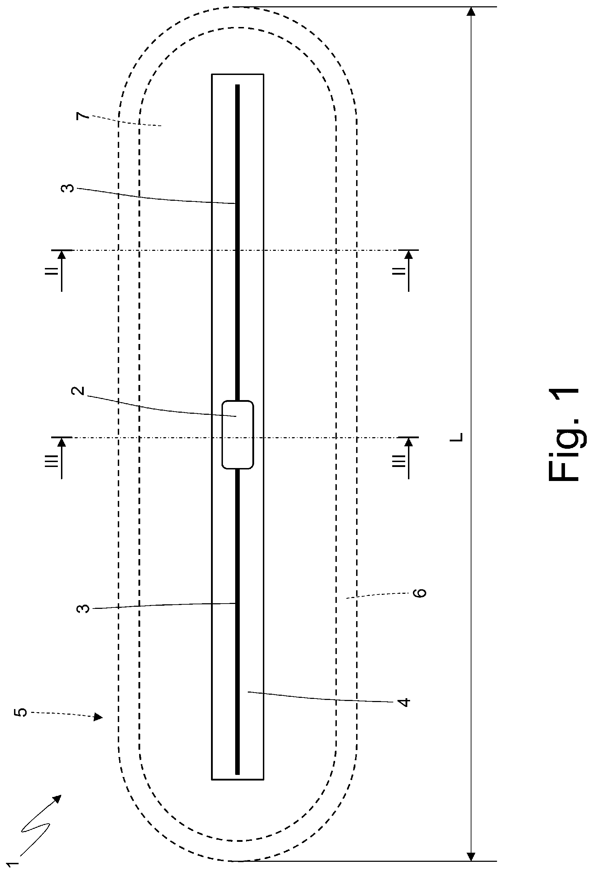

In Figure 1, the numeral 1 denotes a transponder in the entirety thereof, i.e., an electronic device (normally passive, i.e., without a dedicated power supply) that is capable of storing information and that is capable of communicating by means of radio frequency. In other words, the transponder 1 is a "*smart label*" of small dimensions that is suitable for responding to remote polling on the part of specific fixed or portable devices, called readers (or polling devices); a reader is capable of reading and/or modifying the information contained within the transponder 1 that is being polled whilst communicating with the transponder 1 itself in radio frequency. Accordingly, the transponder 1 is part of a wireless reading and/or writing system that operates according to so-called RFID technology (*"Radio-Frequency IDentification"*).

According to that which is shown in Figure 1, the transponder 1 comprises an electronic circuit 2 (i.e., a microchip) equipped with non-volatile memory (typically EEPROM or FRAM, the latter being more costly, but technologically more advanced), an antenna 3 connected to the electronic circuit 2, and a support 4 that carries both the electronic circuit 2 and the antenna 3 and that is frequently defined as a *"substrate"* (that may, for example, comprise a thin sheet of copper-coated vetronite, FR4, or other similar materials); as also detailed hereinafter, the support 4 could also not be present. In the embodiment shown in Figure 1, the antenna 3 is a dipole antenna (or simply a dipole) and comprises two equally open arms that are implemented using a linear electrical conductor whereupon the currents flow that remotely radiate the electromagnetic field.

In use, the antenna 3 receives an electromagnetic signal that, by electromagnetic induction, induces a difference in electrical potential within the antenna 3, which generates the circulation of an electrical current within the electronic circuit 2 in order to supply power to the electronic circuit 2 itself; the electronic circuit 2, thus activated, transmits the data contained within the memory thereof by means of the antenna 3 and, where appropriate, also modifies the data contained within the memory thereof.

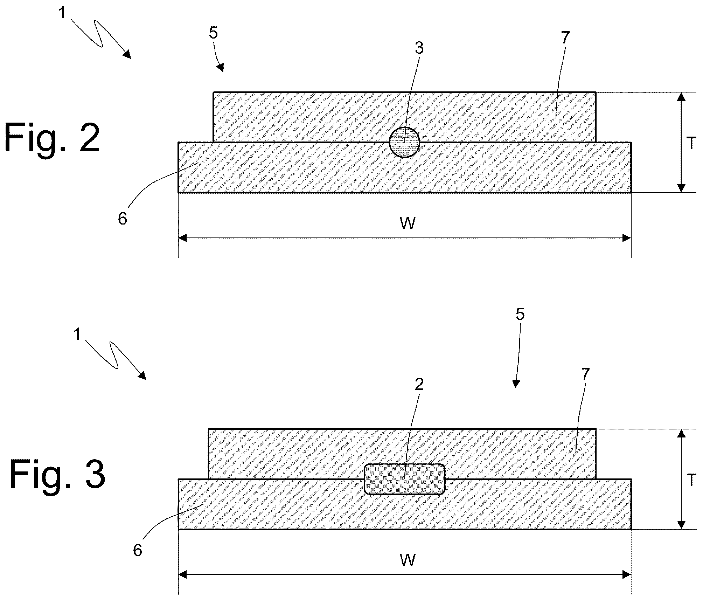

According to that which is shown in Figures 1, 2 and 3, the transponder 1 is inserted into a rubber housing 5, comprising two strips 6 and 7 of green rubber superimposed and pressed one against the other; in general, the two green rubber strips 6 and 7 of the housing 5 are longer/wider than the transponder 1 (i.e., than the electronic circuit 2 and the antenna 3).

According to a different embodiment (not shown) the support 4 is absent and the function thereof is performed by the strips 6 and 7 of rubber of the housing 5.

According to a preferred (but clearly non-limiting) embodiment, the thickness T of the housing 5 (containing the transponder 1 therein) before vulcanization is between 2.3 and 2.9 mm (and is for example equal to 2.6 mm), the width W of the housing 5 before vulcanization is approx. 20-45 mm (and is for example equal to 40 mm), and the length L of the housing 5 before vulcanization is approx. 70-90 mm (and is for example equal to 80 mm). According to a preferred embodiment, before vulcanization the thickness T of the housing 5 is equal to the thickness of the transponder 1 with an added thickness of 0.4-0.5 mm per side (i.e., overall 0.8-1.0 mm). In this way, the two rubber strips 6 and 7 before vulcanization have the same thickness (equal to 0.4-0.5 mm), which is chosen in such a way that between the transponder 1 and the outer surface of each rubber strip 6 or 7 before vulcanization there is a rubber thickness of not less than 0.5 mm (more generally not less than 0.4 mm); i.e., between the transponder 1 and the outer surface of each rubber strip 6 or 7 before vulcanization at least 0.5 mm (0.4 mm) of rubber must be provided. According to this rule, if the transponder 1 has a maximum thickness (i.e., in the thickest area) of 1.6 mm, then the thickness T of the housing 5 (containing the transponder 1 therein) before vulcanization is equal to 2.6 mm; if the transponder 1 is thicker or thinner, the thickness T of the housing 5 is similarly greater or lesser.

Consequently, the two rubber strips 6 and 7 before vulcanization have the same thickness, which is equal to half the thickness of the transponder 1 with the addition of about 0.4-0.5 mm.

When the two rubber strips 6 and 7 before vulcanization have the same thickness, which is equal to half the thickness of the transponder 1 with the addition of about 0.4-0.5 mm, between the transponder 1 (enclosed between the two rubber strips 6 and 7) and the outer surface of the two rubber strips 6 and 7 before vulcanization there is a layer of rubber having a thickness of about 0.4-0.5 mm. This non-vulcanized rubber thickness ensures that, at the end of the vulcanization process, between the transponder 1 (enclosed between the two rubber strips 6 and 7) and the outer surface of the two vulcanized rubber strips 6 and 7 there is a layer of vulcanized rubber having a thickness of at least 0.2 mm (i.e., not less than 0.2-0.3 mm and generally also slightly greater than 0.2-0.3 mm). In other words, the final result to be obtained at the end of the vulcanization process is that the transponder 1 (enclosed between the two rubber strips 6 and 7) is covered (and therefore *"protected"*) by at least 0.2-0.3 mm of vulcanized rubber.

Generally, the length L of the housing 5 before vulcanization is equal to the length of the transponder 1 with the addition of 2-5 mm per side (i.e., a total of 4-10 mm).

In the embodiment illustrated in the accompanying figures, the rubber strip 7 is slightly smaller (i.e., narrower and shorter) than the underlying rubber strip 6 (the difference in size between the two rubber strips 6 and 7 before vulcanization is between 0.5 mm and 8 mm); in this regard it is important to note that the rubber strip 7 which is slightly smaller (i.e., narrower and shorter) than the underlying rubber strip 6 allows a technical effect to be obtained: a rubber step on the innerliner of the tyre creates a block against the flow of air during vulcanization, and during the vulcanization the rubber step is reduced (assuming a substantially conical shape) and various moulding defects may be avoided. According to a different embodiment (not shown), the rubber strip 7 has exactly the same size as the underlying rubber strip 6. In particular, in the embodiment shown in the accompanying figures, the rubber strip 6 has a length L before vulcanization of between 75 and 85 mm (preferably 80 mm), a width W before vulcanization of between 20 and 45 mm (preferably 40 mm), and a thickness T before vulcanization of between 1.2 and 1.4 mm (preferably 1.3 mm); instead, the rubber strip 7 has a length L before vulcanization of between 65 and 75 mm (preferably 70 mm), a width W before vulcanization of between 33 and 37 mm (preferably 35 mm), and a thickness T before vulcanization of between 1.2 and 1.4 mm (preferably 1.3 mm).

According to a preferred embodiment, in plan view, each rubber strip 6 or 7 has two smaller rounded ends so as to be free of sharp edges.

The rubber strip 6 is composed of completely green rubber (i.e., rubber that has never been vulcanized in any way, not even partially), while the rubber strip 7 is composed of only partially vulcanized rubber (i.e., rubber wherein the vulcanization has begun but has not been completed, i.e., rubber that is neither completely green nor completely vulcanized). In particular, the rubber strip 7 is composed of 20-40% vulcanized rubber, i.e., rubber that has been subjected to 20-40% of the vulcanization (as better described hereinafter).

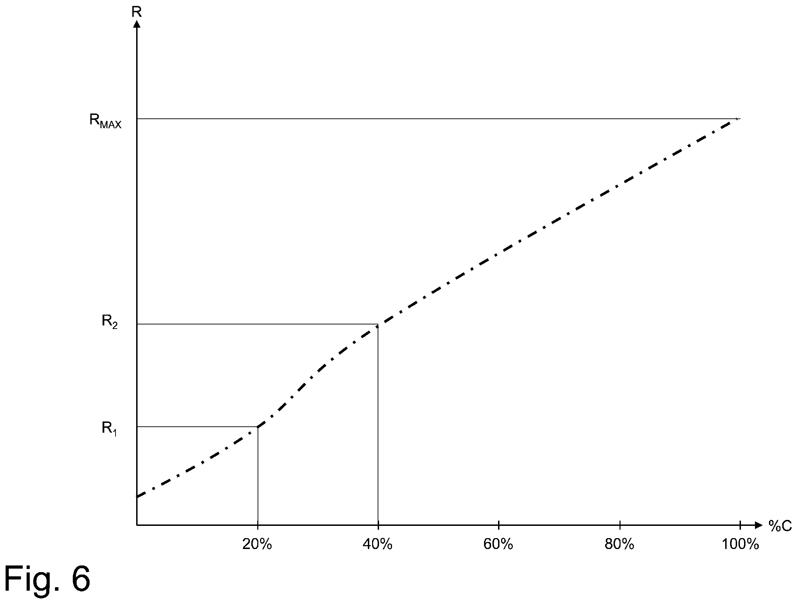

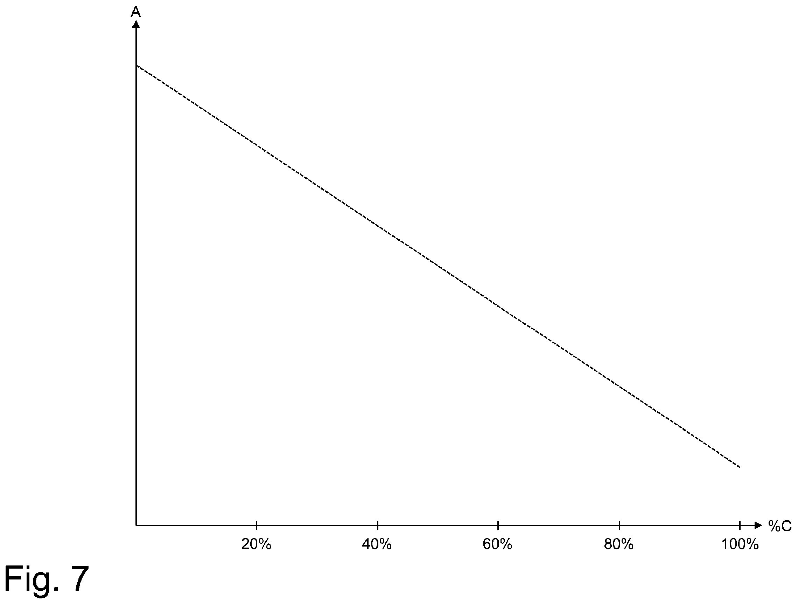

As shown in Figures 6 and 7, as the percentage %C of vulcanization progresses from 0% (corresponding to completely green rubber) to 100% (corresponding to completely vulcanized rubber), the ability of the rubber to form thioether bonds (i.e., the ability of the rubber to adhere to other materials) as shown in Figure 7 decreases and at the same time the rigidity R of the rubber as shown in Figure 6 increases. In the mechanics of materials, stiffness is the ability of a body to oppose (resist) the elastic deformation caused by an external force, and the inverse thereof is called yieldability or flexibility; the ratio between the external force and the elastic deformation is called *"Young's modulus",* or the modulus of elasticity (wherein the unit of measurement thereof is N/m²), and represents a direct measurement of the rigidity of a material (the lower the Young's modulus, the lower the stiffness, and therefore the material deforms more easily).

Generally, the percentage %C of vulcanization is measured based upon the duration of time for which the rubber has been subjected to the vulcanization temperature (typically between 160 and 180°C or more generally between 140 and 200°C); thus a vulcanization percentage %C equal to 50% indicates that the rubber has been subjected to the vulcanization temperature for 50% of the time necessary in order to achieve complete vulcanization.

According to a preferred embodiment shown in Figure 6, the rubber strip 7 is composed of rubber having a stiffness R of between 20% (R₁) and 40% (R₂) of a maximum stiffness R_{MAX} reached upon completion of the vulcanization (alternatively, the stiffness R could be between 20-25% and 50% of the maximum stiffness R_{MAX} reached upon completely of the vulcanization). As mentioned above, the stiffness R may be measured by means of the corresponding *"Young's modulus"* or the modulus of elasticity, and thus the increase in stiffness R corresponds to an increase in the *"Young's modulus".* In particular, the rubber strip 7 is composed of rubber having a tangential elastic constant of between 50 Nm and 100 Nm (more generally of between 40 Nm and 120 Nm).

Preferably, the two rubber strips 6 and 7 are composed of exactly the same type of rubber compound; alternatively, the two rubber strips 6 and 7 could be composed of two different types of rubber compound.

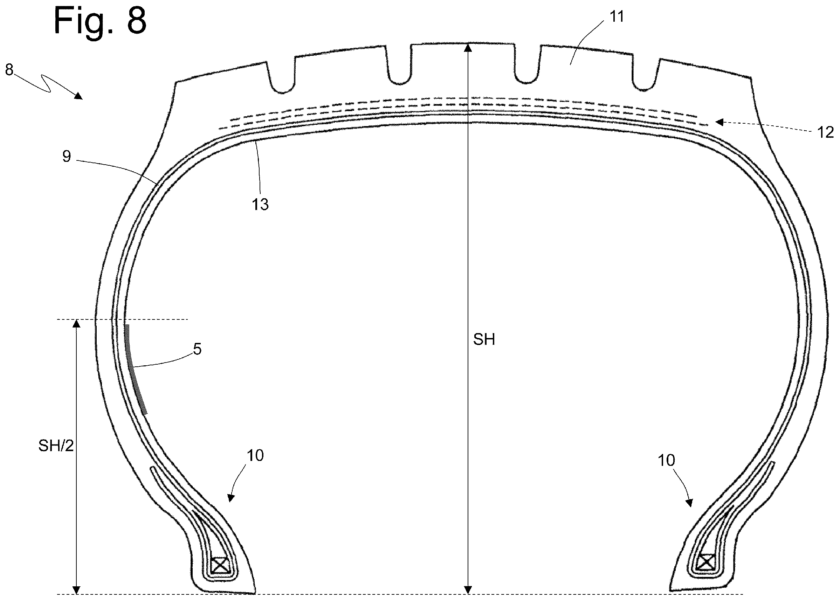

According to that shown in Figure 8, the housing 5 containing the transponder 1 is coupled (attached) to a tyre 8 comprising a toroidal casing 9 that is partially folded over on itself and therefore has two side flaps (i.e., two layers superimposed therebetween and commonly referred to as *"turn-up"*). Two annular beads 10 are provided at opposite sides of the carcass 9, wherein each thereof is surrounded by the carcass 9. The carcass 9 supports an annular tread 11 with the interposition of a tread belt 12. Arranged within the body ply 9 is an innerliner 13 which is airtight, constitutes an inner lining and has the function of retaining the air within the tyre 8 in order to maintain the inflation pressure of the same tyre 8 over time.

The construction of the tyre 8 involves constructing the housing 5 by inserting the transponder 1 between the two rubber strips 6 and then applying (attaching) the housing 5 to the innerliner 13 of the green tyre 8 in such a way that the rubber strip 6 is in direct contact with the innerliner 13 and the rubber strip 7 is separated from the innerliner 13 by the interposition of the rubber strip 6 (i.e., in such a way that the rubber strip 6 is on the side of the innerliner 13 and that the rubber strip 7 is on the opposite side of the innerliner 13).

Once the housing 5 (containing the transponder 1 inside) has been applied to the innerliner 13 of the green tyre 8, the green tyre 8, provided with the housing 5, is subjected to a vulcanization process at the end whereof the housing 5 (containing the transponder 1 therein) has become an integral and inseparable part of the tyre 8. Obviously, the housing 5 may be applied to the innerliner 13 of the green tyre 8 in any position and that shown in Figure 8 is only one possible non-limiting example.

According to a preferred (but not binding) embodiment, shown in Figure 8, the housing 5 is applied to the innerliner 1 of the green tyre 8 at a side wall of the tyre 8 and in such a way that a central portion of the housing 5 has a lower radial height, measured from a radially innermost portion and opposite a tread, of 50% of a height SH of the section of the tyre (again measured radially). In this regard, it is important to note that the housing 5 is preferably applied to the innerliner 1 of the green tyre 8 in such a way that the width W of the housing 5 is oriented radially, the length L of the housing 5 is oriented circumferentially, and the thickness T of the housing 5 is oriented axially.

The embodiments described herein may be combined without departing from the scope of protection of the present invention.

The production method described above has many advantages.

Firstly, the production method described above is particularly simple and economical insofar as it involves performing a few easily automated operations; in essence, compared to the production of a tyre without a transponder 1, it is only a matter of adding the fastening of the housing 5 to a green tyre 8 (an operation that may possibly be performed even before the so-called "tip-turning" when the green tyre 8 is still flat).

Furthermore, the production method described above makes it possible to avoid the high pressure and high temperature reached during the vulcanization process that lead to pieces of the transponder 1 emerging outside the rubber housing 5 thereof (the so-called *"surfacing"* phenomenon), makes it possible to avoid the high pressure and high temperature reached during the vulcanization process that bring pieces of the transponder 1 into contact with the cords of the casing 9, and also makes it possible to prevent the high pressure and high temperature reached during the vulcanization process from causing irregularities in the innerliner 13.

Finally, the production method described above ensures adequately strong and resistant adhesion of the transponder 1 to the tyre 8, thereby avoiding the risk that the transponder 1 may detach itself, even partially, from the tyre 8.

It is important to emphasize that the fact that, in plan view, each strip 6 or 7 of rubber has two smaller rounded ends (in such a way as to be free of sharp edges) is important because the absence of sharp edges (which instead would be there if the shape, in plan view, were perfectly rectangular) reduces the stresses that the housing 5 transmits to the innerliner 13 during the vulcanization process.

### List of reference numbers in the figures

- 1: transponder
- 2: electronic circuit
- 3: antenna
- 4: support
- 5: housing
- 6: strip
- 7: strip
- 8: tyre
- 9: carcass
- 10: beads
- 11: tread
- 12: tread belt
- 13: innerliner
- L: length
- W: width
- T: thickness
- SH: section height

## Claims

1. Production method for a tyre (8) equipped with an electronic device (1) and comprising the steps of:
inserting the electronic device (1) between a first rubber strip (6) and a second rubber strip (7) that therebetween enclose the electronic device (1) which itself defines a housing (5);
applying the housing (5) to an innerliner (13) of a green tyre (8) such that the first strip (6) of rubber is in direct contact with the innerliner (13) and the second strip (7) of rubber is separated from the innerliner (13) by the interposition of the first strip (6) of rubber; and
subjecting the green tyre (8) equipped with the housing (5) to a vulcanization process;
the production method is **characterized in that:**
the first rubber strip (6) is composed of completely green rubber; and
the second rubber strip (7) is composed of only partially vulcanized rubber, i.e., rubber that has started but not completed the vulcanization.

2. Production method according to claim 1, wherein the second strip (7) of rubber is composed of 20-40% vulcanized rubber, i.e., rubber that has been subjected to 20-40% of the vulcanization.

3. Production method according to claim 1 or 2, wherein the second rubber strip (7) is composed of rubber having a stiffness (R) of between 25% and 50% of a maximum stiffness (R_{MAX}) reached upon completion of the vulcanization.

4. Production method according to claim 1, 2 or 3, wherein the second strip (7) of rubber is composed of rubber having a tangential elastic constant of between 40 Nm and 120 Nm.

5. Production method according to any one of claims 1 to 4, wherein the housing (5) before vulcanization comprises an overall thickness (T) equal to the thickness of the electronic device (1) with the addition of 0.5 mm per side.

6. Production method according to any one of claims 1 to 5, wherein between the electronic device (1) and the outer surface of each rubber strip (6, 7) before vulcanization there is a rubber thickness (T) of not less than 0.4 mm and preferably not less than 0.5 mm.

7. Production method according to any one of claims 1 to 6, wherein between the electronic device (1) and the outer surface of each rubber strip (6, 7) after vulcanization there is a rubber thickness (T) of not less than 0.2 mm and preferably not less than 0.3 mm.

8. Production method according to any one of claims 1 to 7, wherein the second rubber strip (7) is smaller than the first rubber strip (6).

9. Production method according to claim 8, wherein a difference in size between the two rubber strips (6, 7) is between 0.5 mm and 8 mm.

10. Production method according to any one of claims 1 to 9, wherein, in plan view, each rubber strip (6 or 7) has two smaller rounded ends so as to be free of sharp edges.

11. Production method according to any one of claims 1 to 10, wherein the two strips (6, 7) of rubber have the same thickness which is equal to half the thickness of the electronic device (1) with the addition of 0.5 mm.

12. Production method according to any one of claims 1 to 11, wherein:
the first strip (6) of rubber has a length (L) of between 75 and 85 mm, a width (W) of between 20 and 45 mm, and a thickness of between 1.2 and 1.4 mm; and
the second strip (7) of rubber has a length (L) of between 65 and 75 mm, a width (W) of between 33 and 37 mm, and a thickness of between 1.2 and 1.4 mm.

13. Production method according to any one of claims 1 to 12, wherein the housing (5) is applied to the innerliner (13) of a green tyre (8) at a side wall of the tyre (8) and in such a way that a central portion of the housing (5) has a radial height, measured from a radially innermost portion and opposite a tread, of less than 50% of a height (SH) of the section of the tyre (8).

## Patentansprüche

1. Herstellungsverfahren für einen Reifen (8), der mit einer elektronischen Vorrichtung (1) ausgestattet ist und umfassend die Schritte:
Einsetzen der elektronischen Vorrichtung (1) zwischen einen ersten Kautschukstreifen (6) und einen zweiten Kautschukstreifen (7), die die elektronische Vorrichtung (1) dazwischen einschließen, das selbst ein Gehäuse (5) definiert;
derartiges Anbringen des Gehäuses (5) auf einen Innerliner (13) eines Reifenrohlings (8), dass der erste Streifen (6) aus Kautschuk in direktem Kontakt mit dem Innerliner (13) steht und der zweite Streifen (7) aus Kautschuk von dem Innerliner (13) durch die Zwischenposition des ersten Streifens (6) aus Kautschuk getrennt ist; und
Unterziehen des Reifenrohlings (8), der mit dem Gehäuse (5) ausgestattet ist, einem Vulkanisationsprozess;
wobei das Herstellungsverfahren **dadurch gekennzeichnet ist, dass:**
der erste Kautschukstreifen (6) vollständig aus unvulkanisiertem Kautschuk besteht; und
der zweite Kautschukstreifen (7) aus nur teilweise vulkanisiertem Kautschuk besteht, d. h. aus Kautschuk, dessen Vulkanisation begonnen, aber noch nicht abgeschlossen ist.

2. Herstellungsverfahren nach Anspruch 1, wobei der zweite Kautschukstreifen (7) zu 20-40 % aus vulkanisiertem Kautschuk besteht, d. h. aus Kautschuk, der 20-40 % der Vulkanisation unterzogen ist.

3. Herstellungsverfahren nach Anspruch 1 oder 2, wobei der zweite Kautschukstreifen (7) aus Kautschuk besteht, der eine Steifigkeit (R) zwischen 25 % und 50 % einer maximalen Steifigkeit (R_{MAX}) aufweist, die nach Abschluss der Vulkanisation erreicht wird.

4. Herstellungsverfahren nach Anspruch 1, 2 oder 3, wobei der zweite Streifen (7) aus Kautschuk aus Kautschuk besteht, der eine tangentiale Elastizitätskonstante zwischen 40 Nm und 120 Nm aufweist.

5. Herstellungsverfahren nach einem der Ansprüche 1 bis 4, wobei das Gehäuse (5) vor der Vulkanisation eine Gesamtdicke (T) aufweist, die gleich der Dicke der elektronischen Vorrichtung (1) zuzüglich 0,5 mm pro Seite ist.

6. Herstellungsverfahren nach einem der Ansprüche 1 bis 5, wobei zwischen der elektronischen Vorrichtung (1) und der Außenoberfläche jedes Kautschukstreifens (6, 7) vor der Vulkanisation eine Kautschukdicke (T) von nicht weniger als 0,4 mm und vorzugsweise nicht weniger als 0,5 mm besteht.

7. Herstellungsverfahren nach einem der Ansprüche 1 bis 6, wobei zwischen der elektronischen Vorrichtung (1) und der Außenoberfläche jedes Kautschukstreifens (6, 7) nach der Vulkanisation eine Kautschukdicke (T) von nicht weniger als 0,2 mm und vorzugsweise nicht weniger als 0,3 mm besteht.

8. Herstellungsverfahren nach einem der Ansprüche 1 bis 7, wobei der zweite Kautschukstreifen (7) kleiner als der erste Kautschukstreifen (6) ist.

9. Herstellungsverfahren nach Anspruch 8, wobei ein Größenunterschied zwischen den zwei Kautschukstreifen (6, 7) zwischen 0,5 mm und 8 mm beträgt.

10. Herstellungsverfahren nach einem der Ansprüche 1 bis 9, wobei jeder Kautschukstreifen (6 oder 7) in der Draufsicht zwei kleinere abgerundete Enden aufweist, um frei von scharfen Kanten zu sein.

11. Herstellungsverfahren nach einem der Ansprüche 1 bis 10, wobei die zwei Streifen (6, 7) aus Kautschuk die gleiche Dicke aufweisen, die gleich der halben Dicke der elektronischen Vorrichtung (1) zuzüglich 0,5 mm ist.

12. Herstellungsverfahren nach einem der Ansprüche 1 bis 11, wobei:
der erste Streifen (6) aus Kautschuk eine Länge (L) zwischen 75 und 85 mm, eine Breite (W) zwischen 20 und 45 mm und eine Dicke zwischen 1,2 und 1,4 mm aufweist; und
der zweite Streifen (7) aus Kautschuk eine Länge (L) zwischen 65 und 75 mm, eine Breite (W) zwischen 33 und 37 mm und eine Dicke zwischen 1,2 und 1,4 mm aufweist.

13. Herstellungsverfahren nach einem der Ansprüche 1 bis 12, wobei das Gehäuse (5) an den Innerliner (13) eines Reifenrohlings (8) an einer Seitenwand des Reifens (8) und auf solche Weise angebracht wird, dass ein zentraler Abschnitt des Gehäuses (5) eine radiale Höhe, gemessen von einem radial innersten Abschnitt und gegenüber einer Lauffläche, von weniger als 50 % einer Höhe (SH) des Querschnitts des Reifens (8) aufweist.

## Revendications

1. Procédé de fabrication d'un pneumatique (8) équipé d'un dispositif électronique (1) et comprenant les étapes consistant à :
insérer le dispositif électronique (1) entre une première bande de caoutchouc (6) et une seconde bande de caoutchouc (7) qui, entre elles, enferment le dispositif électronique (1) qui lui-même définit un logement (5) ;
appliquer le logement (5) à un revêtement intérieur (13) d'un pneumatique vert (8) de telle sorte que la première bande (6) de caoutchouc soit en contact direct avec le revêtement intérieur (13) et que la seconde bande (7) de caoutchouc soit séparée du revêtement intérieur (13) par l'interposition de la première bande (6) de caoutchouc ; et
soumettre le pneumatique vert (8) équipé du logement (5) à un processus de vulcanisation ;
le procédé de fabrication étant **caractérisé en ce que** :
la première bande de caoutchouc (6) est composée de caoutchouc entièrement vert ; et
la seconde bande de caoutchouc (7) est composée de caoutchouc uniquement partiellement vulcanisé, c'est-à-dire de caoutchouc dont la vulcanisation a commencé mais n'est pas terminée.

2. Procédé de fabrication selon la revendication 1, dans lequel la seconde bande (7) de caoutchouc est composée de 20 à 40 % de caoutchouc vulcanisé, c'est-à-dire de caoutchouc ayant subi 20 à 40 % de la vulcanisation.

3. Procédé de fabrication selon la revendication 1 ou 2, dans lequel la seconde bande de caoutchouc (7) est composée de caoutchouc ayant une rigidité (R) comprise entre 25 % et 50 % d'une rigidité maximale (R_{MAX}) atteinte à la fin de la vulcanisation.

4. Procédé de fabrication selon la revendication 1, 2 ou 3, dans lequel la seconde bande (7) de caoutchouc est composée de caoutchouc ayant une constante élastique tangentielle comprise entre 40 Nm et 120 Nm.

5. Procédé de fabrication selon l'une quelconque des revendications 1 à 4, dans lequel le logement (5) avant vulcanisation comprend une épaisseur totale (T) égale à l'épaisseur du dispositif électronique (1) avec l'ajout de 0,5 mm par côté.

6. Procédé de fabrication selon l'une quelconque des revendications 1 à 5, dans lequel entre le dispositif électronique (1) et la surface extérieure de chaque bande de caoutchouc (6, 7) avant la vulcanisation, il y a une épaisseur de caoutchouc (T) d'au moins 0,4 mm et, de préférence, d'au moins 0,5 mm.

7. Procédé de fabrication selon l'une quelconque des revendications 1 à 6, dans lequel entre le dispositif électronique (1) et la surface extérieure de chaque bande de caoutchouc (6, 7) après la vulcanisation, il y a une épaisseur de caoutchouc (T) d'au moins 0,2 mm et, de préférence, d'au moins 0,3 mm.

8. Procédé de fabrication selon l'une quelconque des revendications 1 à 7, dans lequel la seconde bande de caoutchouc (7) est plus petite que la première bande de caoutchouc (6).

9. Procédé de fabrication selon la revendication 8, dans lequel la différence de taille entre les deux bandes de caoutchouc (6, 7) est comprise entre 0,5 mm et 8 mm.

10. Procédé de fabrication selon l'une quelconque des revendications 1 à 9, dans lequel, en vue de dessus, chaque bande de caoutchouc (6 ou 7) présente deux plus petites extrémités arrondies de manière à être dépourvue d'arêtes vives.

11. Procédé de fabrication selon l'une quelconque des revendications 1 à 10, dans lequel les deux bandes (6, 7) de caoutchouc ont la même épaisseur qui est égale à la moitié de l'épaisseur du dispositif électronique (1) avec l'ajout de 0,5 mm.

12. Procédé de fabrication selon l'une quelconque des revendications 1 à 11, dans lequel :
la première bande (6) de caoutchouc a une longueur (L) comprise entre 75 et 85 mm, une largeur (W) comprise entre 20 et 45 mm et une épaisseur comprise entre 1,2 et 1,4 mm ; et
la seconde bande (7) de caoutchouc a une longueur (L) comprise entre 65 et 75 mm, une largeur (W) comprise entre 33 et 37 mm et une épaisseur comprise entre 1,2 et 1,4 mm.

13. Procédé de fabrication selon l'une quelconque des revendications 1 à 12, dans lequel le logement (5) est appliqué sur le revêtement intérieur (13) d'un pneumatique vert (8) au niveau d'une paroi latérale du pneumatique (8) et de telle sorte qu'une partie centrale du logement (5) présente une hauteur radiale, mesurée à partir d'une partie radialement la plus intérieure et opposée à une bande de roulement, inférieure à 50 % d'une hauteur (SH) de la section du pneumatique (8).
